# EUROPÄISCHE PATENTSCHRIFT

(11) **EP 3 165 803 B1**
(45) Veröffentlichungstag und Bekanntmachung des Hinweises auf die Patenterteilung: **19.12.2018**
(21) Anmeldenummer: 16002045.9
(22) Anmeldetag: 21.09.2016
(51) Int. Cl.: F16L 3/10, F16L 3/22, H02G 3/32

(54) **FÜHRUNGS-UND HALTEVORRICHTUNG ZUR AUFNAHME VON ROHREN, KABELN ODER SCHLÄUCHEN**
GUIDING AND RETAINING DEVICE FOR HOLDING PIPES, CABLES OR HOSES
DISPOSITIF DE GUIDAGE ET DE RETENUE POUR LA RÉCEPTION DE TUBES, CÂBLES OU TUYAUX

(30) Priorität: 04.11.2015 DE 202015007620 U
(43) Veröffentlichungstag der Anmeldung: 10.05.2017
(73) Patentinhaber: FKB GmbH, 78727 Oberndorf / Aistaig (DE)
(72) Erfinder: Langenbacher, Oliver, 78727 Oberndorf am Neckar (DE)
(74) Vertreter: Patentanwälte Ruff, Wilhelm, Beier, Dauster & Partner mbB

(56) Entgegenhaltungen:
- EP-A1- 0 486 442
- GB-A- 1 191 102
- JP-A- S 563 376

## Beschreibung

Die Erfindung betrifft ein Führungs- oder Haltevorrichtung mit einem U-förmigen oder C-förmigen Aufnahmeelement zur Aufnahme eines Rohres, Schlauches oder eines Kabels, wobei das Aufnahmeelement einen Kupplungsabschnitt zur lösbaren Kopplung mit anderen Bauteilen aufweist, wobei der Kupplungsabschnitt in einem Umfangsbereich des Aufnahmeelementes angeordnet ist und eine äußere Montagefläche aufweist, in deren Bereich über die Montagefläche vorstehende sowie in die Montagefläche hin ragende Kupplungselemente angeordnet sind, über welche das Aufnahmeelement wahlweise mit einem weiteren Aufnahmeelement koppelbar ist, wobei zu dem Aufnahmeteil ein Halteelement oder ein Verbindungselement vorgesehen ist, mit welchen das Aufnahmeelement oder mehrere Aufnahmeelemente wahlweise koppelbar ist bzw. sind. Vorrichtung der gattungsgemäßen Art zur Führung und/oder Halterung von Gegenständen in Form eines Rohres, Schlauches oder eines Kabels oder ähnlichen Gegenständen sind schon seit langem bekannt.

So ist in der DE 24 46 133 A1 eine als Befestigungsschelle bezeichnete Vorrichtung zur Wandbefestigung von Rohrleitungen, Rohrstutzen, Hüllen oder Kabeln verschiedener Arten beschrieben. Diese Schelle weist eine Art Fußteil auf, von welchem sich zwei seitlich am Fußteil angeordnete Seitenteile etwa rechtwinklig zum Fußteil erstrecken. Diese Seitenteile bilden zusammen mit dem Fußteil eine Art Aufnahmeelement, welches beispielsweise eine kreisbogenförmig verlaufende, C-förmige öder U-förmige Innenkontur aufweist, in welche beispielsweise ein Rohr oder ein Schlauch einsetzbar ist. Die Seitenteile bilden voneinander beabstandete Endabschnitte, auf welche zur Sicherung des aufgenommenen Bauteils ein Verschluss- oder Deckelteil aufsetzbar ist. Die Innenkontur des Deckelteils ist der Innenkontur des Aufnahmeelementes angepasst und kann dieses beispielsweise zu einem kreisrunden Durchbruch ergänzen. Anstatt einer solchen kreisrunden Innenkontur können auch andere Querschnittformen des Durchbruches, wie beispielsweise ein Mehrkant oder dgl. vorgesehen sein, was letztendlich von der Querschnittsform des aufzunehmenden Gegenstandes abhängig ist.

Zur Anordnung dieser Führungs- oder Haltevorrichtung auf einem Untergrund weist das Fußteil eine ebene Grundfläche auf. Des Weiteren sind aus der DE 24 46 133 A1 auch eine Führungs- und Haltevorrichtung bekannt, welche für mehrere im Abstand nebeneinander anzuordnende Rohrleitungen einsetzbar ist. Hierzu ist das Fußteil relativ "breit" ausgebildet, so dass mehrere Seitenwände nebeneinander Platz finden, welche paarweise entsprechende Aufnahmeelemente zur Aufnahme einer entsprechenden Rohrleitung bilden. Zur Sicherung der aufgenommene Bauteile ist ein Verschluss- oder Deckelement vorgesehen, welches gemeinsam alle "Seitenwände" im geschlossenen Zustand "überspannt". Da die einander paarweise zugeordneten "Seitenwände" denselben vorbestimmten Abstand voneinander aufweisen, können nur Rohrleitungen mit demselben Durchmesser aufgenommen werden. Sollen Rohrleitungen unterschiedlicher Durchmesser aufgenommen werden, so ist stets eine eigens dafür dimensionierte Vorrichtung vorzusehen. Ein variabler Einsatz ist somit nicht möglich.

Des Weiteren ist aus der DE 44 35 177 C2 eine Führungs- oder Haltevorrichtung für Rohre oder ähnliche, langgestreckte Gegenstände bekannt, welcher aus einem im Wesentlichen U-förmig gestalteten Grundkörper besteht, welcher das Aufnahmeelement für das aufzunehmende Rohr bildet. Dieser Grundkörper weist einen Bodenabschnitt mit einer ebenen Basisfläche auf, an welche sich seitlich etwa rechtwinklig dazu verlaufende Seitenwände anschließen, die an ihren freien Enden ebene, rechtwinklig zu den Seitenwände verlaufende Begrenzungsflächen bilden. Das Bodenteil bildet zusammen mit den Seitenwänden ein Aufnahmeelement mit einer das Rohr aufnehmenden, U-förmigen oder C-förmigen Innenkontur, welche beim Gegenstand der DE 44 35 177 C2 vorzugsweise kreisbogenförmig verläuft. In der Basisfläche des Bodenteils und den äußeren, ebenfalls ebenen Seitenflächen der Seitenwände sowie den oberen Begrenzungsflächen der freien Enden sind parallel zu diesen Flächen verlaufende, hinterschnittene Nuten vorgesehen, welche zur Aufnahme von in die Nuten einsetzbaren Verbindungselementen dienen.

Mittels dieser Verbindungsstücke sind beim Gegenstand der DE 44 35 177 C2 somit zwei oder mehrere benachbarte Aufnahmeelemente miteinander verbindbar, so dass auch Aufnahmeelemente unterschiedlichen Durchmessers zu einer Führungs- oder Haltevorrichtung zur Aufnahme von unterschiedlichen Rohrquerschnitten miteinander kombinierbar sind. Zur Verbindung zweier Aufnahmeelemente sind wenigstens zwei dieser zusätzlichen Verbindungsstücke erforderlich. In der Grundausführung dieser Aufnahmeelemente sind in der Basisfläche und in den Seitenflächen insgesamt acht solcher hinterschnittenen Nuten vorgesehen, was zu einer komplizierten und aufwändigen Gestaltung führt.

Des Weiteren ist aus der DE 198 56 945 C1 eine Führungs- oder Haltevorrichtung für Rohrleitungen, Schläuche, Kabel und dgl. bekannt, welche ein Fußteil mit zwei Seitenteilen aufweist, welche zusammen eine Öffnung zur Aufnahme des entsprechenden Rohrleitung aufweist. Auch bei dieser Vorrichtung bilden die beiden Seitenteile zusammen mit dem Fußteil eine Art Aufnahmeelement. Dieses Aufnahmeelement definiert mit seinen beiden Seitenteilen eine senkrecht zum Aufnahmeelement verlaufende Symmetrieebne, wobei das Fußteil symmetrisch zu dieser Symmetrieebene etwa rechtwinklig verlaufend zu den beiden Seitenteilen angeordnet ist.

Des Weiteren ist beim Gegenstand der DE 198 56 945 C1 ein Deckel vorgesehen, welcher über ein Filmscharnier an einem der Seitenteile einstückig und schwenkbar angeordnet ist. An seinem freien Ende weist der Deckel eine Art Haltekralle auf, mit welcher der Deckel in geschlossenem Zustand mit außenseitig am anderen Seitenteil in dessen freien Endbereich angeordneten Rastzähnen lösbar in Eingriff bringbar ist. Um zwei solcher Führungs- oder Haltevorrichtungen miteinander, "übereinander" verbinden zu können, ist das Fußteil bodenseitig mit einer seitlich offenen, T-förmig ausgebildeten Haltenut versehen, mit welcher das eine Aufnahmeelement mit dem geschlossenen Deckel eines weiteren, identisch ausgebildeten Aufnahmeelementes verbindbar ist, indem das erste Aufnahmeelement mit ihrer Haltenut auf den geschlossenen Deckel des zweiten Aufnahmeelementes aufgeschoben wird. Damit können zwei oder mehrere Aufnahmeelemente zu einem Führungs- oder Haltevorrichtung miteinander kombiniert werden. Da diese Haltenut beidseitig offen ist und der Deckel keinerlei Anschlag bildet, kann sich diese Formschlussverbindung unbeabsichtigt lösen. Des Weiteren ist es nur schwerlich möglich ein im "unteren" Aufnahmeelement aufgenommenes Bauteil beispielsweise zu Reparaturzwecken auszutauschen, da bei aufgesetzter zweiten Aufnahmeelement der Deckel nur bedingt geöffnet werden kann.

Weiter weist beim Gegenstand der DE 198 56 945 C1 eines der Seitenteile in seinem zur Haltenut hin liegenden "unteren" Endbereich ein nach außen vorstehendes T-förmiges Befestigungselement auf, während das andere Seitenteil zur Haltenut hin ebenfalls im unteren Endbereich des Seitenteils mit einer T-förmig ausgebildeten Ausnehmung versehen ist. Durch diese Ausgestaltung können zwei Aufnahmeelemente auch nebeneinander feststehend miteinander in Verbindung gebracht werden. Dabei erstreckt sich die Ausnehmung ausgehend von der Haltenut des Bodenteils parallel zur Erstreckung des Seitenteils und ist in ihrer Längserstreckung begrenzt. Zum seitlichen Verbinden Aufnahmeelemente wird das eine Aufnahmeelement mit der Ausnehmung seines Seitenteils von "oben" auf das Befestigungselement des Seitenteils des anderen Aufnahmeelementes aufgesteckt. Auch diese Art der Verbindung kann sich unbeabsichtigt lösen, insbesondere bei der Deckenmontage des ersten Aufnahmeelementes, da das Befestigungselement des zweiten Aufnahmeelementes von "unten" in die Ausnehmung einzubringen ist. So können beim Gegenstand der DE 198 56 945 C1 mehrere Aufnahmeelemente miteinander zu einer Führung- oder Haltevorrichtung verbunden werden. Jedoch besteht stets die Gefahr, dass sich die Verbindung selbständig wieder lösen können.

Für eine feststehende Decken, Wand- oder Bodenmontage sind beim Gegenstand der DE 198 56 945 C1 noch diverse Halteelemente vorgesehen, welche zunächst feststehend an der Decke, der Wand oder dem Boden verschraubt werden. Ein solches Halteelement kann als Doppel-T-Profil oder als Halteplatte ausgebildet sein und seitlich vorstehende Haltestege aufweisen, so dass ein Aufnahmeelement mit seiner bodenseitigen Haltenut auf diese Haltestege aufgeschoben werden kann. Auch hier besteht der Nachteil, insbesondere bei einer Wandmontage mit vertikalem Verlauf der Haltenut, dass sich die Verbindung zwischen der Haltenut und dem Halteelement unbeabsichtigt lösen kann.

Weiter ist aus der EP 0 486 442 A1 ein System zur Vormontage von Rohren oder Kabeln in einem Untergrund bekannt, welches modular aufgebaut ist. Die einzelnen Module weisen etwa halbzylindrische Aufnahmen zum "Einlegen" eines rohrförmigen Gegenstandes, wie beispielsweise herkömmliche oder optischen Fieberglasleitungen auf. Die einzelnen Module weisen einen etwa rechteckförmigen Grundquerschnitt auf und sind miteinander koppelbar. Zur Kopplung untereinander ist jedes Modul mit einer ebenen Grundfläche versehen. Unabhängig von aufzunehmenden Durchmesser eine Rohres oder einer Leitung weisen alle Module dieselbe Breite auf. In einem der seitlichen Endbereiche der Grundfläche sind über diese vorstehende Steckleisten und im anderen Endbereich in die Grundfläche hineinragende Nuten vorgesehen, welche wechselseitig miteinander rastend Eingriff gebracht werden können. Diese Module können auf Grund ihrer geometrischen Ausgestaltung über deren Grundfläche folglich nur untereinander kombiniert werden, wobei die Kombinationen stets eine "kastenförmige" Grundgeometrie aufweist. Da die Aufnahmen für die Rohrleitungen halbzylindrisch ausgebildet sind, müssen zur vollständigen Umschließung einer Rohrleitung stets zwei identische Module eingesetzt werden. Eine Kombination unterschiedlicher Modulen, indem diese mit halbzylindrischen Aufnahmen unterschiedlichen Durchmessers kombiniert werden, ist nicht möglich. Auch sind unterschiedliche Konfigurationen, bespielsweise drei oder vier Module sternförmig anzuordnen nicht möglich.

Demgemäß liegt der Erfindung die Aufgabe zugrunde eine Führungs- oder Haltevorrichtung zu schaffen, deren Bestandteile wahlweise untereinander kombinierbar sind, ohne dass ein versehentliches Lösen der Verbindungen erfolgen kann, wobei ein sicherer Halt des aufzunehmenden Gegenstandes gewährleistet sein soll.

Die Aufgabe wird erfindungsgemäß zusammen mit den Merkmalen des Oberbegriffes des Anspruchs 1 dadurch gelöst, dass das Aufnahmeelement voneinander beabstandete Halteschenkel bildet, deren Endabschnitte vorstehende Rastnasen bilden, auf welche ein Sicherungsbügel mit entsprechenden Rastvertiefungen rastend und lösbar aufsetzbar ist. Durch diese Ausgestaltung wird des Weiteren ein in einem Aufnahmeelement aufgenommenes Bauteil sicher gehalten.

Weiter wird durch die erfindungsgemäße Ausgestaltung eine Führungs- oder Haltevorrichtung zur Verfügung gestellt, welche äußerst variabel einsetzbar ist, da das Aufnahmeelement variabel entweder mit einem weiteren Aufnahmeelement, einem Halteelement oder auch mit einem Verbindungselement koppelbar ist, welche dann in ihrem montierten Zustand die eigentliche Führungs- oder Haltevorrichtung bilden, welche wahlweise zur Aufnahme nur eines rohrförmigen Gegenstandes oder auch zwei oder mehrere solcher Gegenstände einsetzbar ist. Insbesondere sind Aufnahmeelement unterschiedlichen Durchmessers miteinander koppelbar, so dass Rohre oder Schläuche oder Kabel oder dgl. mit unterschiedlichen Durchmessern aufgenommen werden und somit gemeinschaftlich gehalten oder geführt werden können. So ist es durch entsprechende Auswahl von Aufnahmeelementen, Halteelementen und/oder Verbindungselementen beispielweise möglich, einerseits Schläuche und andererseits auch zugehörige Elektrokabel in einem "Strang" zu halten bzw. zu führen. Solche Ausgestaltungen können beispielsweise erforderlich sein, wenn von einer Waschmaschine der Zulaufschlauch parallel zum Elektrokabel eines elektrischen Stoppventils von der Wasserentnahmestelle zur Waschmaschine geführt werden soll. Auch die Kopplungsmöglichkeit mit einem zusätzlichen Halteelement erlaubt es, einen solchen Strang beispielsweise an einer Gebäudewand oder auch direkt mit der Waschmaschine an dessen Gehäuse zu befestigen.

Durch die über die Montagefläche des Kupplungsabschnittes vorstehenden Kupplungselemente in Zusammenwirken mit den in die Montagefläche hinein ragenden Kupplungselemente sind zwei Aufnahmeelemente in einfacher Weise zusammensteckbar und können in diesem montierten Zustand nicht mehr gegeneinander seitlich verstellt werden. Diesbezüglich weist das zweite Aufnahmeelement dieselben Kupplungselemente auf, welche ebenfalls an einer entsprechenden Montagefläche angeordnet sind. Auch die wahlweise vorgesehenen Halteelemente oder Verbindungselemente sind mit einer solchen (oder mehren solcher) Montagefläche(n) mit entsprechenden Kupplungselementen versehen, so dass ein oder mehrere Aufnahmeelemente mit diesen zu einer Führungs- oder Haltevorrichtung variabel zusammen fügbar sind.

Wird ein Aufnahmeelement "nur" mit einem Halteelement gekoppelt, so dient diese entstehende Führungs- oder Haltevorrichtung beispielsweise zur Wandmontage eines Rohres oder Schlauches oder dgl.. Über das vorgesehene Verbindungelement können beispielsweise zwei Aufnahmeelemente und ein Halteelement miteinander gekoppelt werden, so dass beispielsweise zwei Rohre oder Schläuche an einer Wand oder einer Decke feststehend montiert werden können. Auch kann eine "lose" Verlegung von zwei oder mehreren Rohren, Schläuchen oder Kabeln gewünscht sein, so dass das Verbindungselement mit mehreren Aufnahmeelemente gekoppelt werden kann. Auch können zwei oder mehrere Verbindungelemente miteinander gekoppelt werden, welche dann wiederum mit Aufnahmeelementen und/oder einem Halteelement in Verbindung stehen.

Weitere Vorteilhafte Ausgestaltungen sind den weiteren Unteransprüchen zu entnehmen.

So kann gemäß Anspruch 2 vorgesehen sein, dass die Montagefläche eine Symmetrieebene definiert, welche senkrecht zum Aufnahmeelement verläuft und dass die Kupplungselemente in einem Seitenbereich der Symmetrieebene als über die Montagefläche vorstehendes Rastelement und im anderen Seitenbereich der Symmetrieebene als in die Montagefläche hinein ragende Rastvertiefung ausgebildet sind und dass das Rastelement und die Rastvertiefung spielsymmetrisch zur Symmetrieebene angeordnet sind. Durch diese Ausgestaltung können alle Kupplungsabschnitte des Aufnahmeelementes, des Haltelementes und des Verbindungselementes identisch ausgestaltet werden.

Durch die Ausgestaltung nach Anspruch 3 wird insbesondere die Stabilität der Verbindung der Bauteil über die Kupplungsabschnitte verbessert. Auch können die Bauteile über ihre Kupplungsabschnitte einfacher zusammen gefügt werden. Demgemäß kann gemäß Anspruch 3 vorgesehen sind, dass im Bereich der Montagefläche zwischen dem Rastelement und der Rastvertiefung auf einer Seite der Symmetrieebene ein Führungszapfen und auf der anderen Seite der Symmetrieebene eine Führungsbohrung vorgesehen sind, welche spiegelsymmetrisch zur Symmetrieebene angeordnet sind.

Zur variablen Kombination der Aufnahmeelemente und des Haltelementes ist gemäß Anspruch 4 vorgesehen, dass das weitere Aufnahmeelement oder die Haltevorrichtung mit einer Montagefläche versehen sind, welche dieselben Kupplungselemente aufweist, wie das mit diesen zu verbindende Aufnahmeelement.

Des Gleichen gilt auch nach Anspruch 5 für das Verbindungselement. Demnach kann vorgesehen sein, dass das Verbindungselement zur Kopplung mit zwei oder mehreren Aufnahmeelementen zwei oder mehrere Montageflächen aufweist, welche dieselben Kupplungselemente aufweist, wie die mit diesem zu verbindenden Aufnahmeelemente. Auch ist es dadurch in Zusammenhang mit Anspruch 4 möglich ein Verbindungselement mit einem Halteelement zu verbinden.

Weiter kann gemäß Anspruch 6 vorgesehen sein, dass die Endabschnitte des Aufnahmeelementes spiegelsymmetrisch zur Symmetrieebene angeordnet sind.

Wie oben zu Anspruch den Ansprüchen 4 und 5 ausgeführt kann nach Anspruch 7 das Halteelement wahlweise mit einem Verbindungselement oder einem Aufnahmeelement koppelbar sein.

Auf Grund der erfindungsgemäßen Ausgestaltung wird eine Führungs- oder Haltevorrichtung zur Verfügung gestellt, welche auf Grund der wahlweisen Kopplungsmöglichkeiten Ihrer Bauteile äußert variabel gestaltbar und somit den jeweiligen Erfordernissen zur Führung oder Halterung einzelner oder mehrerer rohrförmige Gegenstände anpassbar ist. Je nach den gegebenen Anforderungen müssen nicht zwingend alle Bauteile eingesetzt werden. Wird beispielsweise keine Wandhalterung benötigt, so kann das Halteelement auch entfallen. Wird nur die Verbindung zweier Rohre oder Schläuche zum "losen" Verlegen auf einem Untergrund benötigt, so sind nur zwei Aufnahmeelementen miteinander zu koppeln. Es sind jedoch auch Erfordernisse denkbar, bei welchen mehrere Aufnahmeelemente und mehrere Verbindungselemente vorzusehen sind. Auch können zwei oder mehrere Verbindungselemente zusammen mit zwei oder mehreren Halteelementen erforderlich sein, welche wiederum mit wendigsten einem Aufnahmeelement koppelbar sind.

Auch ist die Führungs- oder Haltevorrichtung mit wenigstens einem Aufnahmeelement nicht auf die Aufnahme von Rohren oder Schläuchen oder Kabeln beschränkt. In der Aufnahmevorrichtung sind auch andere längliche Gegenstände zur Halterung und/oder Führung aufnehmbar.
(Fortsetzung auf der ursprünglichen Seite "- Seite 10 von 20 -")

Anhand der Zeichnung wird die Erfindung nachfolgend beispielhaft näher erläutert. Es Zeigt:
- Fig. 1: eine perspektivische Explosionsdarstellung eines Aufnahmeelementes einer Führungs- oder Haltevorrichtung und einem zugehörigen Sicherungsbügel;
- Fig. 2: die Bauteile aus Fig. 1 in einer perspektivischen Schnittdarstellung;
- Fig. 3: die Bauteile aus Fig. 2 in ihrem montierten Zustand in perspektivischem Schnitt;
- Fig. 4: einen perspektivische Explosionsdarstellung zweier miteinander koppelbarer Aufnahmeelemente;
- Fig. 5: eine perspektivische Darstellung eines Verbindungselementes, mit welchem drei Aufnahmeelemente aus den vorangegangenen Zeichnungsfiguren koppelbar sind;
- Fig. 6: eine perspektivische Darstellung eines Verbindungselementes, mit welchem vier Aufnahmeelemente aus den vorangegangenen Zeichnungsfiguren koppelbar sind;
- Fig. 7: eine Draufsicht auf das Verbindungselement aus Fig. 5 mit insgesamt drei angekoppelten Aufnahmeelementen;
- Fig. 8: eine Draufsicht des Verbindungselementes aus Fig. 6 mit insgesamt vier angekoppelten Aufnahmeelementen;
- Fig. 9: eine perspektivische Darstellung eines zusätzlichen Halteelementes, über welches ein Aufnahmeelement beispielsweise an einer Wand, einer Decke oder auf einem Untergrund feststehend montierbar ist;
- Fig. 10: eine Draufsicht auf das Verbindungselement aus Fig. 5 mit angekoppeltem Halteelement aus Fig. 9 sowie zwei angekoppelten Aufnahmeelementen.

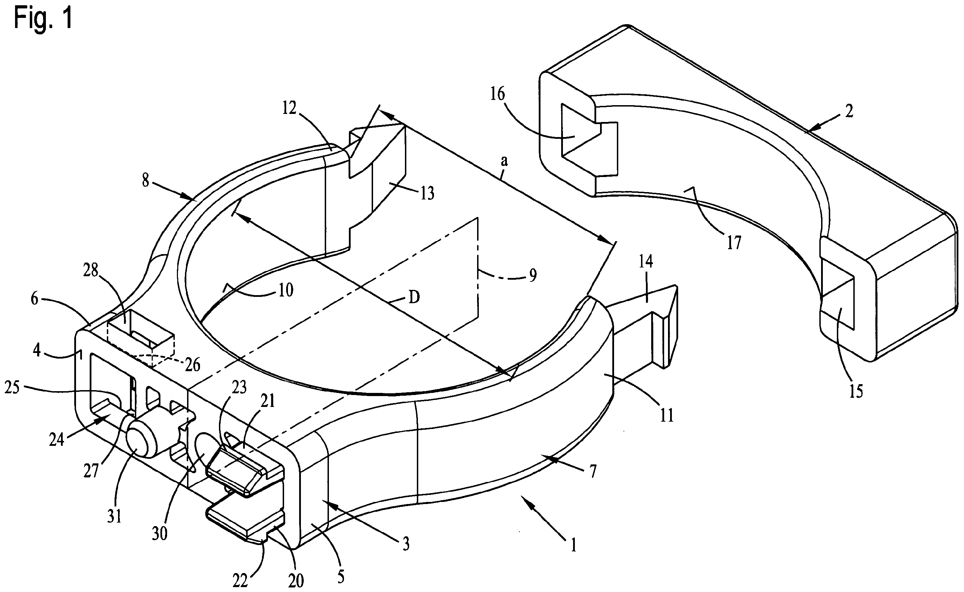

Fig. 1 zeigt eine perspektivische Darstellung einer ersten Ausführungsvariante eines Aufnahmeelementes 1 zusammen mit einem Sicherungsbügel 2. Das Aufnahmeelement bildet einen Kupplungsabschnitt 3, welcher außenseitig eine ebene Montagefläche 4 aufweist. In den seitlichen Endbereichen 5, 6 des Kupplungsabschnittes 3 ist jeweils ein Halteschenkel 7 bzw. 8 vorgesehen, welche beim dargestellten Ausführungsbeispiel symmetrisch zu einer senkrecht zum Kupplungsabschnitt 3 bzw. dessen Montagefläche 4 verlaufenden Symmetrieebene 9 angeordnet sind. Die beiden Halteschenekel 7, 8 weisen beim vorliegenden Ausführungsbeispiel die gleiche Länge auf und bilden zusammen mit dem Kupplungsabschnitt 3 eine innere, kreisbogenförmig verlaufende Aufnahmefläche 10. Im Bereich ihrer freien Endabschnitte 11, 12 geht die Aufnahmefläche 10 jeweils in eine bogenförmig radial nach außen gerichtete Einlauffläche 13 bzw. 14 über, so dass ein zwischen den Haltschenkeln 7, 8 aufzunehmender, rohrförmiger Gegenstand einfacher zwischen die beiden Halteschenkel 7, 8 einsetzbar ist. Der Abstand a dieser Einlaufflächen 13 und 14 voneinander ist vorliegend kleiner als der Durchmesser D der Aufnahmefläche 10, so dass ein passend zwischen den Halteschenekel 7, 8 eingesetzter Gegenstand nicht ohne Weiteres heraus rutschen kann.

Um des Weiteren ein solches versehentliches Herausrutschen sicher zu vermeiden ist der Sicherungsbügel 2 vorgesehen. Zur feststehenden und lösbaren Montage des Sicherungsbügels 2 an den beiden Halteschenkeln 7, 8 bilden die Halteschenkel 7, 8 in Verlängerung zu ihren Endabschnitte 11, 12 jeweils eine Rasthaken 13 bzw. 14. Im montierten Zustand des Sicherungsbügels 2 an den beiden Halteschenkeln 7, 8 greifen die Rasthaken 13, 14 entsprechend in seitlich im Sicherungsbügel 2 angeordnete Rastvertiefungen 15, 16 ein. Der Sicherungsbügel 2 weist zum Aufnahmeelement 1 hin eine kreisbogenförmig verlaufende Innenfläche 17 auf, welche im montierten Zustand des Sicherungsbügels 2 am Aufnahmeelement 1 zusammen mit der inneren Aufnahmefläche 10 der Haltschenkel 7, 8 und des Kupplungsabschnittes 3 eine kreisringförmig umlaufende Zylinderfläche bildet. Hierzu sei angemerkt, dass die Aufnahmefläche 10 sowie die Innenfläche 17 nicht zwingend eine kreisrunde Zylinderfläche bilden müssen. Diese können auch eine andere Innenkontur aufweisen, was letztendlich von der Querschnittsform des aufzunehmenden Gegenstandes abhängig ist, welcher diese Innenkontur vorzugsweise anzupassen ist.

Weiter ist aus Fig. 1 erkennbar, dass die ebene Montagefläche 4 den beiden Endabschnitten 11 und 12 der Halteschenkel 7, 8 gegenüber liegt und mehrere Kupplungselemente aufweist, über welche das Aufnahmeelement 1 mit einem weiteren Aufnahmeelement, einem Verbindungselement oder auch einem Halteelement zusammen gesteckt werden kann, wie später noch näher erläutert wird.

Um eine entsprechend Steckverbindung zu einem solchen weiteren Bauteil herstellen zu können, sind in dem einen seitlichen Endbereich 5 des Kupplungsschnittes 3 bzw. dessen Montagefläche 4 Rastelemente in Form zweier Rastzungen 20, 21 vorgesehen, welche nach außen gerichtete Rastnasen 22, 23 bilden. Im zweiten seitlichen Endbereich 6 weist die Montagefläche 4 des Weiteren eine Rastvertiefung 24 auf, welche mit den Rastelementen 20 bis 23 eines zweiten Aufnahmeelementes oder auch eines entsprechend ausgestalteten Verbindungselementes oder auch eines Haltelementes rastend in Verbindung bringbar ist. Hierzu bildet die Rastvertiefung 24 Hinterschneidungen mit Rastkanten 25 und 26, welche von den Rastnasen 23 und 24 eines weiteren Aufnahmeelementes im montierten Zustand entsprechend rastend hintergreifbar sind. Um die Rastzungen 20, 21 mit ihren Rastnasen 22, 23 mit den Rastkanten 25, 26 der Rastvertiefung 24 außer Eingriff bringen zu können, sind oberseitig und unterseitig im Kupplungsabschnitt 3 im Bereich der Rastvertiefung 24 Durchbrüche 27 und 28 vorgesehen, durch welche hindurch die Rastnasen 25, 26 mittels eines Werkzeuges, beispielweise eines Schraubendrehers, zurück gedrückt werden können, so dass die Rastverbindungen entsprechend lösbar sind.

Zu den dargestellten Rastverbindungelementen 20 bis 24 können zusätzliche Steckverbindungen vorgesehen sein. Wie aus Fig. 1 erkennbar ist, ist zwischen der Symmetrieebene 9 und den Rastzungen 20, 21 in der Montagefläche 4 bzw. dem Kupplungsabschnitt 3 eine Bohrung 30 vorgesehen. Auf der gegenüber liegenden Seite der Montagefläche 4 bzw. des Kupplungsabschnittes 3 ist ein über die Montagefläche 4 vorstehender Steckzapfen 31 vorgesehen, welcher zwischen der Symmetrieebene 9 und der Rastvertiefung 24 angeordnet ist.

Bei dem dargestellten Ausführungsbeispiel sind die Rastelemente 20 bis 23 in Bezug auf die Symmetrieebene 9 symmetrisch zur Rastvertiefung 24 angeordnet, so dass die Rastelemente 20 bis 23 mit einer entsprechenden Rastvertiefung 24 eines weiteren Aufnahmeelementes und gleichzeitig die Rastvertiefung 24 mit den Rastelementen 20 bis 23 eines weiteren Aufnahmeelementes in Eingriff gebracht werden können. Das Gleiche gilt auch für die Bohrung 30 und den Steckzapfen 31, welche ebenfalls symmetrisch zur Symmetrieebne 9 am bzw. im Kupplungsabschnitt 3 bzw. dessen Montagefläche 4 angeordnet sind.

Durch diese spezielle Ausgestaltung können alle miteinander zu koppelnden Bauteile - zwei Aufnahmeelemente oder ein Aufnahmeelement mit einem Verbindungselement oder ein Aufnahmeelement mit einem Haltelement oder ein Haltelement mit einem Verbindungselement - wahlweise miteinander verbunden werden, wobei alle diese Bauteile den identisch gleichen Kupplungsabschnitt 3 mit den Rastelementen 20 bis 23 und der Rastvertiefung 24 sowie der Bohrung 30 und dem Steckzapfen 31 in gleicher Anordnung aufweisen.

Die Bohrung 30 und der Steckzapfen 31 sind als zusätzliche, stabilisierende Steckverbindungselemente vorgesehen und müssen nicht zwingend vorhanden sein.

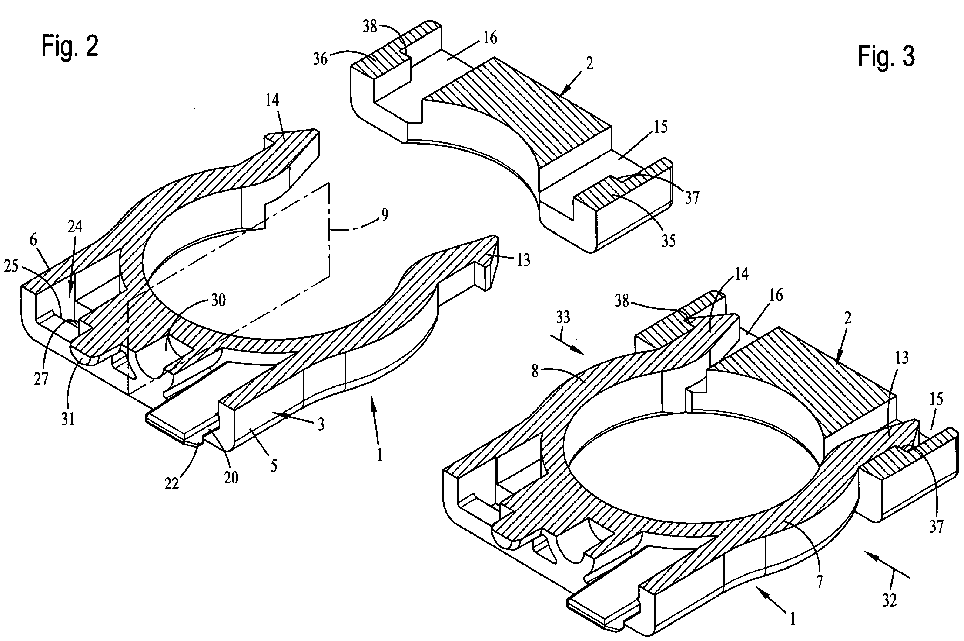

Fig. 2 zeigt das Aufnahmeelement 1 zusammen mit dem Sicherungsbügel 2 in perspektivisch geschnittener Darstellung. Im ersten, seitlichen Endbereich 5 des Kupplungsabschnittes 3 ist die untere Rastzunge 20 mit ihrer nach "außen" bzw. nach "unten" gerichteten Rastnase 22 erkennbar. Zwischen dieser Rastzunge 20 und der Symmetrieebene 9 ist die als Sackloch ausgebildete Bohrung 30 angeordnet.

Weiter zeigt Fig. 2 im zweiten, seitlichen Endbereich 6 des Kupplungsabschnittes 3 die Rastvertiefung 24 mit ihrer "unteren" Rastkante 25 sowie dem "unteren" Durchbruch 27. Zwischen der Rastvertiefung 24 und der Symmetrieebene 9 ist der Steckzapfen 31 angeordnet.

Des Weiteren sind die beiden Rastvertiefungen 15 und 16 des Sicherungsbügels 2 erkennbar, welche jeweils zur seitlich außen liegenden Begrenzungswand 35 bzw. 36 des Sicherungsbügels 2 abgesetzt ausgebildet sind und jeweils eine Rastkante 37 bzw. 38 bilden. Mit diesen Rastkanten 37, 38 ist das Aufnahmeelement 1 mit seinen Rasthaken 13 und 14 rastend in Eingriff bringbar.

Diesen montierten Eingriffszustand zeigt die perspektivische Schnittdarstellung der Fig. 3. Es ist erkennbar, dass die beiden Rasthaken 13 und 14 die jeweils zugehörige Rastkante 37 bzw. 38 der jeweiligen Rastvertiefung 15 bzw. 16 hintergreifen, so dass der Sicherungsbügel 2 feststehend aber lösbar mit dem Aufnahmeelement 1 verbunden ist. Das Aufnahmeelement 1 besteht aus einem federelastisch nachgiebigen aber formstabilen Werkstoff, vorzugsweise einem Kunststoff, so dass es zum Lösen der in Fig. 3 dargestellten Rastverbindung zwischen den Rasthaken 13, 14 und den zugehörigen Rastvertiefungen 15, 16 lediglich erforderlich ist, die beiden Halteschenkel 7 und 8 des Aufnahmeelementes 1 in Richtung der beiden Pfeile 32, 33 "zusammen" zu drücken, so dass die Rasthaken 13, 14 mit den Rastkanten 37, 38 außer Eingriff gelangen und somit der Sicherungsbügel 2 bei Bedarf in einfacher und sicherer Weise vom Aufnahmeelement 1 abgenommen werden kann.

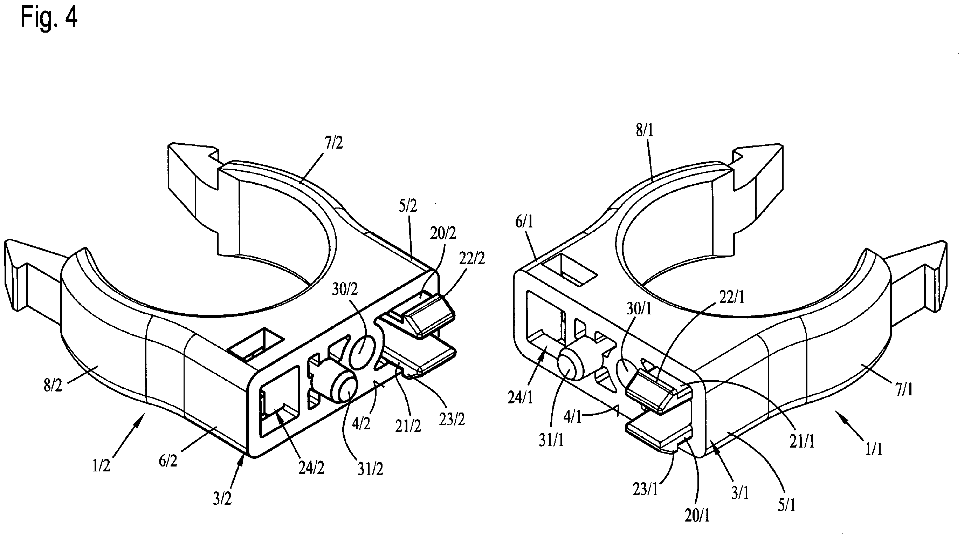

Aus Fig. 4 zeigt zwei Aufnahmeelemente 1/1 und 1/2 in perspektivischer Explosionsdarstellung anhand derer die Funktionsweise insbesondere der Kupplungsabschnitte beispielhaft näher erläutert wird. Die beiden Aufnahmeelemente 1/1 und 1/2 unterscheiden sich vom Aufnahmeelement 1 aus den Fig. 1 und 2 lediglich durch die Länge und den bogenförmigen Verlauf der beiden Halteschenkel 7/1, 8/1 und 7/2, 8/2, welche bei den dargestellten Ausführungsvarianten kürzer ausgebildet sind und somit auch eine stärkere Krümmung aufweisen.

Das Kupplungselement 3/1 und das Kupplungselement 3/2 der beiden Aufnahmeelemente 1/1 und 1/2 sind identisch ausgebildet wie bei der Ausführungsvariante nach den Fig. 1 und 2, so dass diese Kupplungsabschnitte 3/1 und 3/2 miteinander aber auch mit dem Kupplungsabschnitt 3 des Aufnahmeelementes 1 aus den Fig. 1 und 2 wahlweise koppelbar sind. Hierzu weisen diese Kupplungsabschnitte 3/1 und 3/2 in ihrem ersten seitlichen Endbereich 5/1 bzw. 5/2 ebenfalls über deren Montageflächen 4/1 bzw. 4/2 vorstehende Rastzungen 20/1, 21/1 bzw. 20/2, 21/2 mit entsprechenden Rastnasen 22/1, 22/2 bzw. 23/1, 23/2 auf. Im zweiten seitlichen Endbereich 6/1 bzw. 6/2 sind die Kupplungsabschnitte 3/1, 3/2 mit der zugehörigen Rastvertiefung 24/1 bzw. 24/2 ausgestattet, so dass die beiden Aufnahmeelemente 1/1 und 1/2 über diese Kupplungselemente miteinander feststehend koppelbar sind.

Beim Zusammenstecken gelangen somit die Rastzungen 20/1 und 21/1 des Kupplungsabschnittes 3/1 des einen Aufnahmeelementes 1/1 mit der Rastvertiefung 24/2 des anderen Aufnahmeelementes 1/2 und die Rastzungen 20/2, 21/2 des Kupplungsabschnittes 3/2 des anderen Aufnahmeelementes 1/2 mit der Rastvertiefung 24/1 des einen Aufnahmeelementes 1/1 in Eingriff, so dass die beiden Aufnahmeelemente 1/1 und 1/2 feststehend miteinander in Verbindung stehen. Die Kupplungsabschnitte 3/1 und 3/2 sind ebenfalls mit einer Bohrung 30/1 bzw. 30/2 versehen, welche beim Zusammenstecken der beiden Aufnahmeelemente 1/1 und 1/2 mit den zugeordneten Steckzapfen 31/1 bzw. 31/2 des jeweils anderen Kupplungsabschnittes 3/2 bzw. 3/1 in Eingriff gelangen. Durch die Bohrungen 30/1 und 30/2 und die zugehörigen Steckzapfen 31/1 und 31/2 werden die beiden Kupplungsabschnitt 3/1 und 3/2 im montierten Zustand zusätzlich fixiert. Diese Bohrungen 30/1, 30/2 und die Steckzapfen 31/1, 31/2 müssen aber nicht zwingend vorgesehen sein.

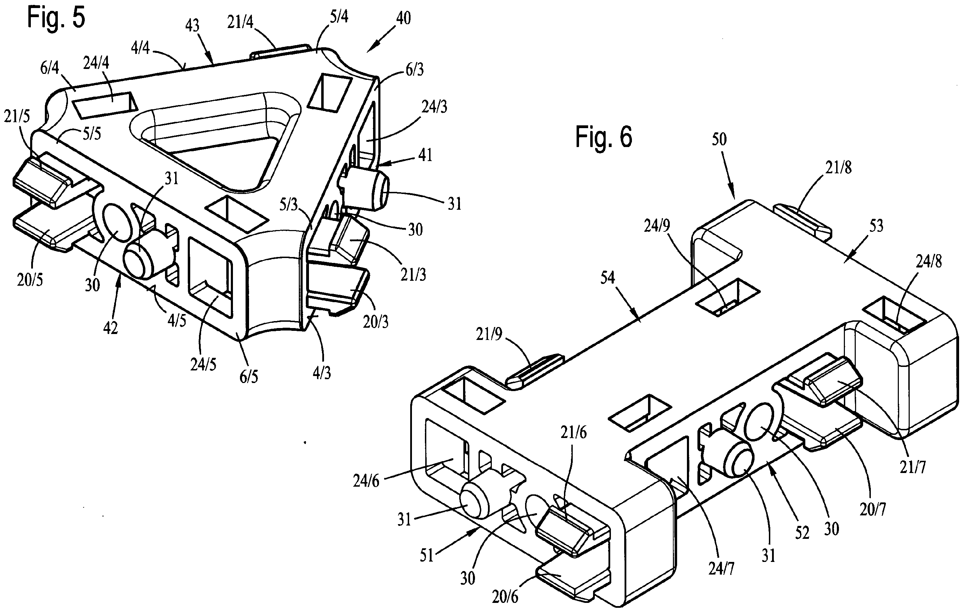

Um die Aufnahmeelemente 1, 1/1 und 1/2 möglichst variabel einsetzen zu können, sind des Weiteren Verbindungselemente vorgesehen, wie diese beispielhaft den Fig. 5 und 6 zu entnehmen sind.

Das Verbindungselement 40 aus Fig. 5 dient zur Kopplung von drei weiteren Bauteilen, wie beispielsweise von drei Aufnahmeelementen. Hierzu weist das Verbindungselement 40 insgesamt drei Kupplungsabschnitte 41, 42 und 43 auf, deren Ausgestaltung der Ausgestaltung des Kupplungselementes 3 des Aufnahmeelementes 1 aus den Fig. 1 und 2 oder auch der Kupplungselemente 3/1 und 3/2 der Aufnahmeelemente 1/1 und 1/2 aus Fig. 4 entspricht. Dies ist in Fig. 5 insbesondere für die Kupplungselemente 41 und 42 erkennbar.

So sind die Kupplungselemente 41, 42 und 43 in ihrem ersten seitlichen Endbereich 5/3, 5/4 bzw. 5/5 ebenfalls mit über deren Montageflächen 4/3, 4/4 bzw. 4/5 nach außen vorstehenden Rastzungen 20/3, 21/3 bzw. 21/4 bzw. 20/5, 21/5 versehen, deren Ausgestaltung identisch den Rastzungen 20 und 21 des Kupplungselementes 3 des Aufnahmeelementes 1 aus Fig. 1 entspricht.

Im jeweils zweiten Endbereich 6/3, 6/4 sowie 6/5 weisen die Kupplungselemente 3/3, 3/4, 3/5 jeweils ebenfalls eine Rastvertiefung 24/3, 24/4 bzw. 24/5 auf. Auch die Ausgestaltung dieser Rastvertiefungen 24/3, 24/5 sowie 24/4 entspricht der Ausgestaltung der Rastvertiefung 24 des Kupplungselementes 3 des Aufnahmeelementes 1 aus Fig. 1.

Somit ist erkennbar, dass das Verbindungselement 40 mit seinen Kupplungsabschnitten 41, 42, 43 wahlweise mit einem weiteren Verbindungselement 40 oder auch mit einer der Aufnahmeelemente 1, 1/1 bzw. 1/2 feststehend in Verbindung bringbar ist. Damit lassen sich über dieses Verbindungselement 40 insgesamt drei solcher Aufnahmeelemente 1, 1/1 oder 1/2 feststehend miteinander verbinden, so dass insgesamt drei rohrförmige oder schlauchförmige Gegenstände aufgenommen und passend gegeneinander geführt werden können. Des Weiteren ist aus Fig. 5 erkennbar, dass auch die Kupplungsabschnitte 41, 42, 43 entsprechend der Ausgestaltung des Kupplungsabschnittes 3 der Ausführungsvariante des Aufnahmeelementes 1 aus Fig. 1 eine Bohrung 30 und einen zugehörigen Steckzapfen 31 aufweisen. In Fig. 5 sind lediglich die Bohrungen 30 und Steckzapfen 31 der beiden Kupplungsabschnitte. 41 und 43 erkennbar.

Fig. 6 zeigt ein zweites Ausführungsbeispiel eines Verbindungselementes 50, welches insgesamt vier Kupplungsabschnitte 51, 52, 53 und 54 aufweist. Auch diese Kupplungselemente 51 bis 54 sind mit entsprechenden Rastzungen 20/6, 21/6 bzw. 21/7 bzw. 21/8 bzw. 20/9, 21/9 versehen. Auch die beiden "hinteren" Kupplungsabschnitte 53 und 54 weisen eine "untere" Rastzunge auf, welche allerdings in Fig. 6 nicht sichtbar ist.

Auch sind die Kupplungsabschnitte 51 bis 54 mit entsprechenden Rastvertiefungen 24/6, 24/7, 24/8 bzw. 24/9 versehen. Auch die Ausgestaltung der Kupplungsabschnitte 51 bis 54 mit ihren "Verbindungselementen" entspricht der Ausgestaltung der des Kupplungsabschnittes 3 der Ausführungsvariante des Aufnahmeelementes 1 nach Fig. 1, so dass insbesondere Aufnahmeelemente 1, 1/1, 1/2 aber auch das Verbindungelement 40 wahlweise mit einem der Kupplungsabschnitte 51, 52, 53 bzw. 54 feststehend in Eingriff bringbar ist.

Auch sind die Kupplungsabschnitte 51 bis 54 mit entsprechenden Bohrungen 30 und Steckzapfen 31 versehen, wie dies aus Fig. 6 für die Kupplungsabschnitte 51 und 52 erkennbar ist.

Werden insgesamt vier Aufnahmeelemente 1, 1/1 oder auch 1/2 mit dem Verbindungselement 50 in Eingriff gebracht, so können hier wahlweise auch vier rohrförmige oder schlauchförmige Gegenstände im Abstand voneinander sicher geführt bzw. gehalten werden. Des Weiteren ist es auch möglich, das Verbindungselement 40 mit dem Verbindungselement 50 zu koppeln, so dass in diesem Falle insgesamt sechs Aufnahmeelemente 1, 1/1 oder auch 1/2 miteinander verbindbar sind.

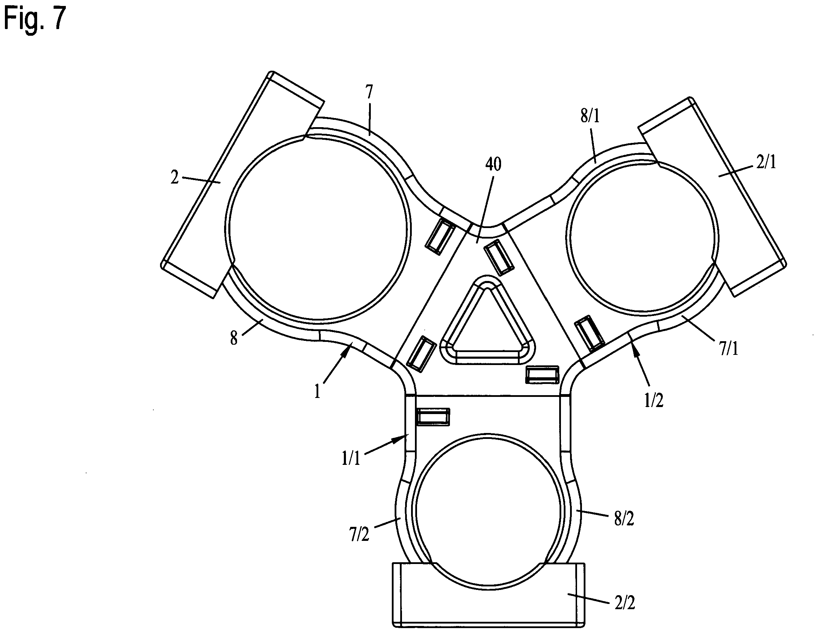

Bezüglich der Kupplungsmöglichkeiten zeigen die Zeichnungsfiguren 7 und 8 jeweils eine Draufsicht auf ein Kupplungselement 40 bzw. 50. In Fig. 7 steht dabei das Verbindungselement 40 mit insgesamt drei Aufnahmeelementen 1, 1/1 und 1/2 feststehend in Verbindung. Auf den Halteschenkeln 1, 8 bzw. 7/1, 8/1 bzw. 7/2,8/2 der Aufnahmeelemente 1, 1/1, 1/2 sind die entsprechend zugehörigen Sicherungsbügel 2, 2/1 bzw. 2/3 aufgesteckt.

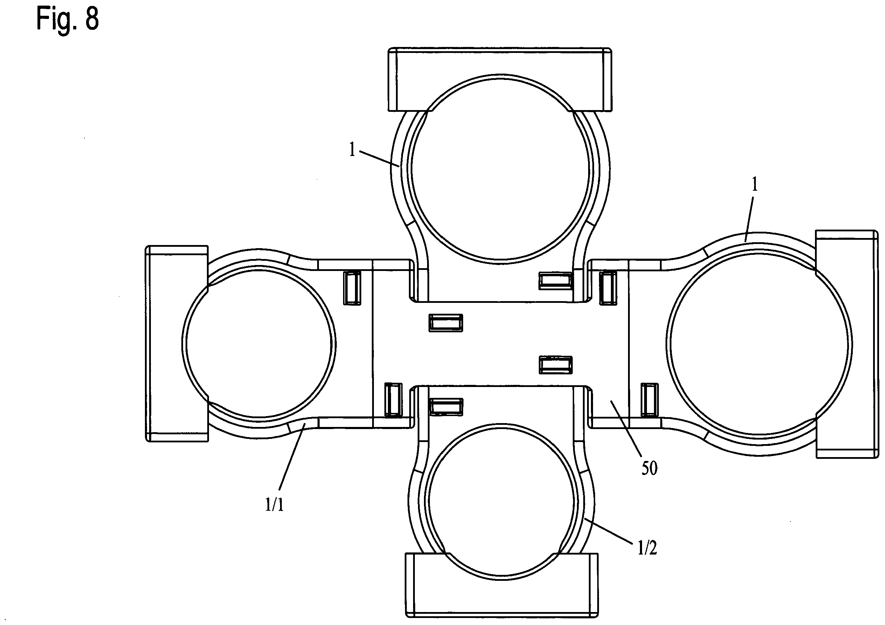

Fig. 8 zeigt eine Draufsicht des Verbindungselementes 50, welches seinerseits wiederum mit vier Aufnahmeelementen 1, 1/1 bzw. 1/2 in Verbindung steht, wobei in der Darstellung der Fig. 8 wahlweise zwei Aufnahmeelemente 1 mit dem Verbindungselement 50 gekoppelt sind.

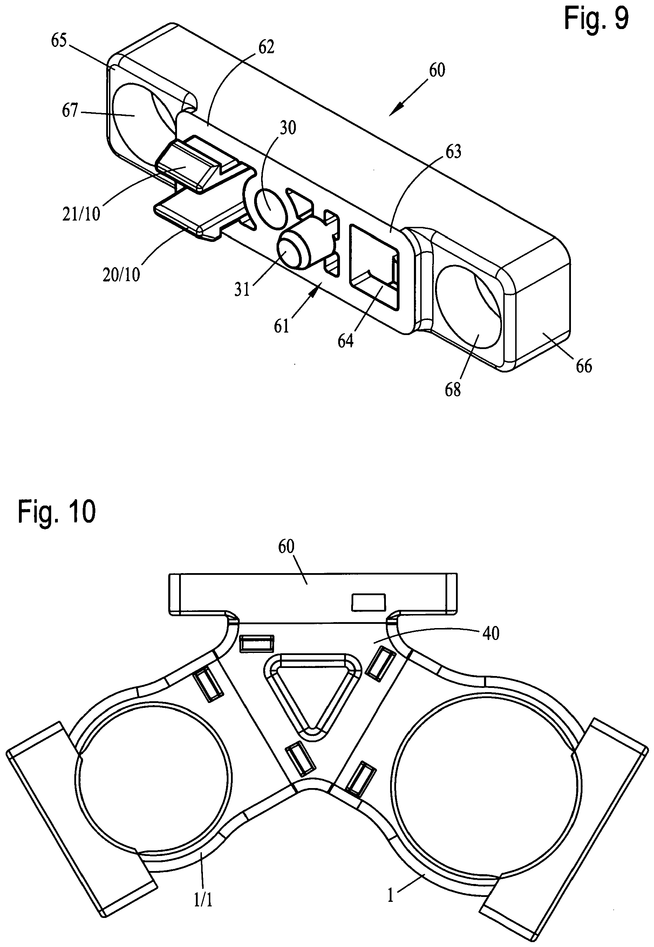

Fig. 9 zeigt eine perspektivische Darstellung einer möglichen Ausgestaltung eines Halteelementes 60, welches wahlweise mit einem der Verbindungselemente 40 bzw. 50 oder auch mit einem der Aufnahmeelemente 1, 1/1 oder 1/2 koppelbar ist. Zu diesem Zweck weist das Halteelement 60 einen Kupplungsabschnitt 61 auf, welcher im Wesentlichen identisch ausgebildet ist wie der Kupplungsabschnitt 3 des Aufnahmeelementes 1 aus Fig. 1.

Dementsprechend weist der Kupplungsabschnitt 61 in seinem einen Endbereich 62 wiederum mit entsprechenden Rastzungen 20/10 bzw. 21/10 versehen ist, deren Ausgestaltung wiederum der Ausgestaltung der Rastzungen 20 und 21 des Aufnahmeelementes 1 aus Fig. 1 entspricht. In seinem zweiten Endbereich 63 weist der Kupplungsabschnitt 61 wiederum eine Rastvertiefung 64 auf, deren Ausgestaltung der Rastvertiefung 24 des Ausführungsbeispiels des Aufnahmeelementes 1 aus Fig. 1 entspricht.

Des Weiteren ist aus Fig. 9 ersichtlich, dass das Halteelement 60 seitlich "neben" der jeweiligen Endbereiche 62 und 63 jeweils einen Montageflansch 65 bzw. 66 bildet, welche jeweils mit einer Montagebohrung 67 bzw. 68 versehen sind. Über diese Montagebohrungen 67 und 68 ist das Halteelement 60 beispielsweise an einer Decke, einer Wand oder einem sonstigen Untergrund feststehend befestigbar.

Aufgrund der Ausgestaltung des Kupplungsabschnittes 61, welcher ebenfalls eine Bohrung 30 sowie einen Steckzapfen 31 aufweist, ist das Halteelement 60 wahlweise mit einem der Aufnahmeelemente 1, 1/1 oder auch 1/2 oder auch mit einem der Verbindungselemente 40 oder 50 feststehend koppelbar.

Hierzu zeigt Fig. 10 beispielhaft eine Draufsicht mit dem Halteelement 60, dem Verbindungselement 40 sowie zwei Aufnahmeelementen 1 und 1/1. Somit lassen sich diese beiden Aufnahmeelemente 1 und 1/1 über das Verbindungselement 40 sowie das Halteelement 60 feststehend auf einem Untergrund bzw. einer Wand oder einer Decke montieren.

Es ist erkennbar, dass aufgrund der erfindungsgemäßen Ausgestaltung, insbesondere der Kupplungsabschnitte, eine Halte- oder Führungsvorrichtung zur Verfügung gestellt wird, welche mit ihren Aufnahmeelementen 1, 1/1, 1/2 äußerst variabel zur Aufnahme und Führung von einem oder mehreren rohrförmigen bzw. langgestreckten Gegenständen einsetzbar ist. Sowohl die Aufnahmeelemente 1, 1/1, 1/2 als auch die Verbindungselemente 40 und 50 können "beliebig" miteinander kombiniert werden, wobei bei Bedarf zur feststehenden Halterung zusätzlich das Halte-element 60 dienen kann. Wird das Halteelement 60 nicht benötigt, so werden die entsprechenden langgestreckten rohrförmigen oder auch schlauchförmigen Gegenstände "lose" geführt, wobei sich diese nicht gegenseitig berühren sondern "paketweise", je nach Anzahl, gegeneinander geführt sind und somit in einfacher Weise definiert "verlegt" werden können.

## Patentansprüche

1. Führungs- oder Haltevorrichtung mit einem U-förmigen oder C-förmigen Aufnahmeelement (1, 1/1 1/2) zur Aufnahme eines Rohres, Schlauches oder eines Kabels, wobei das Aufnahmeelement (1, 1/1, 1/2) einen Kupplungsabschnitt (3, 3/1, 3/2) zur lösbaren Kopplung mit anderen Bauteilen aufweist, wobei der Kupplungsabschnitt (3, 3/1, 3/2) in einem Umfangsbereich des Aufnahmeelementes (1, 1/1, 1/2) angeordnet ist und eine äußere Montagefläche (4, 4/1, 4/2) aufweist, in deren Bereich über die Montagefläche (4, 4/1, 4/2) vorstehende sowie in die Montagefläche hin ragende Kupplungselemente (20, 21, 20/1, 21/1, 20/2, 21/2 bzw. 24, 24/1, 24/2) angeordnet sind, über welche das Aufnahmeelement (1, 1/1, 1/2) wahlweise einem weiteren Aufnahmeelement (1, 1/1 oder 1/2) koppelbar ist, wobei zu dem Aufnahmeelement (1, 1/1, 1/2) ein Halteelement (60) oder ein Verbindungselement (40, 50) vorgesehen ist, mit welchen das Aufnahmeelement (1, 1/1, 1/2) oder mehrere Aufnahmeelemente (1, 1/1, 1/2) wahlweise koppelbar ist bzw. sind,
**dadurch gekennzeichnet,**
**dass** das Aufnahmeelement (1, 1/1, 1/2) voneinander beabstandete Halteschenkel (7, 7/1, 7/2, 8, 8/1, 8/2) bildet, deren Endabschnitte (11, 12) vorstehende Rastnasen (13, 14) bilden, auf welche ein Sicherungsbügel (2, 2/1, 2/2) mit entsprechenden Rastvertiefungen (15, 16) rastend und lösbar aufsetzbar ist.

2. Führungsvorrichtung nach Anspruch 1, **dadurch gekennzeichnet, dass** die Montagefläche (4) eine Symmetrieebene (9) definiert, welche senkrecht zum Aufnahmeelement (1) verläuft und dass die Kupplungselemente (20, 21, 20/1, 21/1, 20/2, 21/2 bzw. 24, 24/1, 24/2) in einem Seitenbereich (5, 5/1, 5/2) der Symmetrieebene (9) als über die Montagefläche vorstehendes Rastelement (20, 21, 20/1, 21/1, 20/2, 21/2) und im anderen Seitenbereich (6, 6/1, 6/2) der Symmetrieebene (9) als in die Montagefläche hinein ragende Rastvertiefung (24, 24/1, 24/2) ausgebildet sind und
dass das Rastelement (20, 21, 20/1, 21/1, 20/2, 21/2) und die Rastvertiefung (24, 24/1, 24/2) symmetrisch zur Symmetrieebene (9) angeordnet sind.

3. Führungsvorrichtung nach Anspruch 2, **dadurch gekennzeichnet, dass** im Bereich der Montagefläche (4, 4/1, 4/2) zwischen dem Rastelement (20, 21, 20/1, 21/1, 20/2, 21/2 bzw. 24, 24/1, 24/2) und der Rastvertiefung (24, 24/1, 24/2) auf einer Seite der Symmetrieebene (9) ein Steckzapfen (31) und auf der anderen Seite der Symmetrieebene (9) eine Bohrung (30) vorgesehen sind, welche symmetrisch zur Symmetrieebene (9) angeordnet sind.

4. Führungsvorrichtung nach einem der Ansprüche 1 bis 3, **dadurch gekennzeichnet, dass** das weitere Aufnahmeelement (1/1, 1/2) oder die Haltevorrichtung (60) mit einer Montagefläche (4/1, 4/2) versehen sind, welche dieselben Kupplungselemente (20/1, 21/1, 20/2, 21/2 bzw. 24/1, 24/2) aufweist, wie das mit diesen Bauteilen (1/1, 1/2 oder 60) zu verbindende Aufnahmeelement (1).

5. Führungsvorrichtung nach einem der Anspruch 1 bis 3, **dadurch gekennzeichnet, dass** das Verbindungselement (40, 50) zur Kopplung mit zwei oder mehreren Aufnahmeelementen (1, 1/1 oder 1/2) zwei oder mehrere Montageflächen (4/3, 4/4, 4/5) aufweist, welche dieselben Kupplungselemente (20/3 bis 20/9; 21/3 bis 21/9 bzw. 24/3 bis 24/9) aufweist, wie die mit diesem Verbindungselement (40, 50) zu verbindenden Aufnahmeelemente (1, 1/1, 1/2).

6. Führungsvorrichtung nach einem der Ansprüche 2 bis 5, **dadurch gekennzeichnet, dass** die Endabschnitte (11, 12) des Aufnahmeelementes (1) symmetrisch zur Symmetrieebene (9) angeordnet sind.

7. Führungsvorrichtung nach einem der Ansprüche 1 bis 6, **dadurch gekennzeichnet, dass** das Halteelement (60) wahlweise mit einem Verbindungselement (40, 50) oder einem Aufnahmeelement (1, 1/1, 1/2) koppelbar ist.

## Claims

1. Guiding or holding device having a U-shaped or C-shaped receiving element (1, 1/1, 1/2) for receiving a pipe, hose or a cable, wherein the receiving element (1, 1/1, 1/2) has a coupling portion (3, 3/1, 3/2) for releasably coupling to other components, wherein the coupling portion (3, 3/1, 3/2) is arranged in a peripheral region of the receiving element (1, 1/1, 1/2) and has an outer mounting surface (4, 4/1, 4/2) in the region of which there are arranged coupling elements (20, 21, 20/1, 21/1, 20/2, 21/2 or 24, 24/1, 24/2) which protrude beyond the mounting surface (4, 4/1, 4/2) and project into the mounting surface, via which coupling elements the receiving element (1, 1/1, 1/2) can be selectively coupled to a further receiving element (1, 1/1 or 1/2), wherein a holding element (60) or a connecting element (40, 50) is provided for the receiving element (1, 1/1, 1/2) and by means of which the receiving element (1, 1/1, 1/2) or a plurality of receiving elements (1, 1/1, 1/2) can be selectively coupled, **characterized in that** the receiving element (1, 1/1, 1/2) forms spaced-apart holding legs (7, 7/1, 7/2, 8, 8/1, 8/2) whose end portions (11, 12) form protruding latching lugs (13, 14) onto which a securing bracket (2, 2/1, 2/2) having corresponding latching depressions (15, 16) can be placed in a latching and releasable manner.

2. Guiding device according to Claim 1, **characterized in that** the mounting surface (4) defines a plane of symmetry (9) which extends perpendicularly to the receiving element (1), and **in that**, in one lateral region (5, 5/1, 5/2) of the plane of symmetry (9), the coupling elements (20, 21, 20/1, 21/1, 20/2, 21/2 or 24, 24/1, 24/2) are designed as a latching element (20, 21, 20/1, 20/2, 21/2) which protrudes beyond the mounting surface and, in the other lateral region (6, 6/1, 6/2) of the plane of symmetry (9), are designed as a latching depression (24, 24/1, 24/2) which projects into the mounting surface, and **in that** the latching element (20, 21, 20/1, 21/1, 20/2, 21/2) and the latching depression (24, 24/1, 24/2) are arranged symmetrically to the plane of symmetry (9).

3. Guiding device according to Claim 2, **characterized in that** a spigot (31) is provided in the region of the mounting surface (4, 4/1, 4/2) between the latching element (20, 21, 20/1, 21/1, 20/2, 21/2 or 24, 24/1, 24/2) and the latching depression (24, 24/1, 24/2) on one side of the plane of symmetry (9) and a bore (30) is provided on the other side of the plane of symmetry (9) which spigot and bore are arranged symmetrically to the plane of symmetry (9).

4. Guiding device according to one of Claims 1 to 3, **characterized in that** the further receiving element (1/1, 1/2) or the holding device (60) are provided with a mounting surface (4/1, 4/2) which has the same coupling elements (20/1, 21/1, 20/2, 21/2 or 24/1, 24/2) as the receiving element (1) to be connected to these components (1/1, 1/2 or 60).

5. Guiding device according to one of Claims 1 to 3, **characterized in that**, for coupling to two or more receiving elements (1, 1/1 or 1/2), the connecting element (40, 50) has two or more mounting surfaces (4/3, 4/4, 4/5) which have the same coupling elements (20/3 to 20/9; 21/3 to 21/9 or 24/3 to 24/9) as the receiving elements (1, 1/1, 1/2) to be connected to this connecting element (40, 50).

6. Guiding device according to one of Claims 2 to 5, **characterized in that** the end portions (11, 12) of the receiving element (1) are arranged symmetrically to the plane of symmetry (9).

7. Guide device according to one of Claims 1 to 6, **characterized in that** the holding element (60) can be selectively coupled to a connecting element (40, 50) or a receiving element (1, 1/1, 1/2).

## Revendications

1. Dispositif de guidage ou de retenue comprenant un élément de réception (1, 1/1 1/2) en forme de U ou en forme de C servant à recevoir un tube, un tuyau flexible ou un câble, l'élément de réception (1, 1/1, 1/2) comprenant une partie d'accouplement (3, 3/1, 3/2) servant à l'accouplement de manière libérable à d'autres pièces, la partie d'accouplement (3, 3/1, 3/2) étant disposée dans une région périphérique de l'élément de réception (1, 1/1, 1/2) et comprenant une surface de montage extérieure (4, 4/1, 4/2) dans la région de laquelle sont disposés des éléments d'accouplement (20, 21, 20/1, 21/1, 20/2, 21/2 ou 24, 24/1, 24/2) faisant saillie au-delà de la surface de montage (4, 4/1, 4/2) et pénétrant dans la surface de montage, par le biais desquels l'élément de réception (1, 1/1, 1/2) peut être accouplé sélectivement à un autre élément de réception (1, 1/1 ou 1/2), dans lequel, en plus de l'élément de réception (1, 1/1, 1/2), un élément de retenue (60) ou un élément de liaison (40, 50) est prévu, à l'aide desquels l'élément de réception (1, 1/1, 1/2) ou plusieurs éléments de réception (1, 1/1, 1/2) est ou peuvent être accouplé(s) sélectivement,
**caractérisé en ce que**
l'élément de réception (1, 1/1, 1/2) forme des branches de retenue (7, 7/1, 7/2, 8, 8/1, 8/2) espacées l'une de l'autre, dont les parties d'extrémité (11, 12) forment des ergots d'encliquetage (13, 14) saillants sur lesquels un étrier de fixation (2, 2/1, 2/2) doté d'évidements d'encliquetage (15, 16) correspondants peut être placé de manière encliquetable et libérable.

2. Dispositif de guidage selon la revendication 1, **caractérisé en ce que** la surface de montage (4) définit un plan de symétrie (9), lequel s'étend perpendiculairement à l'élément de réception (1), et **en ce que** les éléments d'accouplement (20, 21, 20/1, 21/1, 20/2, 21/2 ou 24, 24/1, 24/2) sont, dans une région latérale (5, 5/1, 5/2) du plan de symétrie (9), réalisés sous forme d'élément d'encliquetage (20, 21, 20/1, 21/1, 20/2, 21/2) faisant saillie au-delà de la surface de montage et, dans l'autre région latérale (6, 6/1, 6/2) du plan de symétrie (9), réalisés sous forme d'évidement d'encliquetage (24, 24/1, 24/2) pénétrant dans la surface de montage et
**en ce que** l'élément d'encliquetage (20, 21, 20/1, 21/1, 20/2, 21/2) et l'évidement d'encliquetage (24, 24/1, 24/2) sont disposés symétriquement par rapport au plan de symétrie (9).

3. Dispositif de guidage selon la revendication 2, **caractérisé en ce que**, dans la région de la surface de montage (4, 4/1, 4/2) entre l'élément d'encliquetage (20, 21, 20/1, 21/1, 20/2, 21/2 ou 24, 24/1, 24/2) et l'évidement d'encliquetage (24, 24/1, 24/2), un tenon enfichable (31) est prévu d'un côté du plan de symétrie (9) et un alésage (30) est prévu de l'autre côté du plan de symétrie (9), lesquels sont disposés symétriquement par rapport au plan de symétrie (9).

4. Dispositif de guidage selon l'une quelconque des revendications 1 à 3, **caractérisé en ce que** l'autre élément de réception (1/1, 1/2) ou le dispositif de retenue (60) est pourvu d'une surface de montage (4/1, 4/2), laquelle comprend les mêmes éléments d'accouplement (20/1, 21/1, 20/2, 21/2 ou 24/1, 24/2) que l'élément de réception (1) à relier à ces pièces (1/1, 1/2 ou 60) .

5. Dispositif de guidage selon l'une quelconque des revendications 1 à 3, **caractérisé en ce que** l'élément de liaison (40, 50) comprend deux ou plus de deux surfaces de montage (4/3, 4/4, 4/5) pour l'accouplement à deux ou plus de deux éléments de réception (1, 1/1 ou 1/2), lesquelles comprennent les mêmes éléments d'accouplement (20/3 à 20/9 ; 21/3 à 21/9 ou 24/3 à 24/9) que les éléments de réception (1, 1/1, 1/2) à relier à cet élément de liaison (40, 50).

6. Dispositif de guidage selon l'une quelconque des revendications 2 à 5, **caractérisé en ce que** les parties d'extrémité (11, 12) de l'élément de réception (1) sont disposées symétriquement par rapport au plan de symétrie (9).

7. Dispositif de guidage selon l'une quelconque des revendications 1 à 6, **caractérisé en ce que** l'élément de retenue (60) peut être accouplé sélectivement à un élément de liaison (40, 50) ou à un élément de réception (1, 1/1, 1/2).
